# EUROPEAN PATENT SPECIFICATION

(11) **EP 3 979 838 B1**
(45) Date of publication and mention of the grant of the patent: **19.06.2024**
(21) Application number: 20730053.4
(22) Date of filing: 05.06.2020
(51) Int. Cl.: A24B 15/00, A24B 15/24, A23L 5/20

(54) **METHOD OF PRODUCING A BLENDED LIQUID TOBACCO EXTRACT FROM TWO OR MORE TOBACCOS**
VERFAHREN ZUR HERSTELLUNG EINES GEMISCHTEN FLÜSSIGEN TABAKEXTRAKTS AUS ZWEI ODER MEHR TABAKS
PROCÉDÉ DE PRODUCTION D'UN EXTRAIT DE TABAC LIQUIDE MÉLANGÉ À PARTIR DE DEUX OU PLUSIEURS TABACS

(30) Priority: 05.06.2019 EP 19178550
(43) Date of publication of application: 13.04.2022
(73) Proprietor: Philip Morris Products S.A., 2000 Neuchâtel (CH)
(72) Inventor: SILVESTRINI, Patrick Charles, 2000 Neuchâtel (CH); FARINE, Marie, 2000 Neuchâtel (CH); LANASPÈZE, Sébastien, 2000 Neuchâtel (CH); MIVELAZ, Benoît, 2000 Neuchâtel (CH); RAPHOZ, Christel, 2000 Neuchâtel (CH); TZIMOULIS, Steve, 2000 Neuchâtel (CH)
(74) Representative: Taylor, Gillian Claire
(86) International application number: PCT/EP2020/065711
(87) International publication number: WO 2020/245415

(56) References cited:
- WO-A1-2018/210680
- US-A- 5 235 992
- US-A1- 2007 023 058
- US-A1- 2016 073 678
- US-A1- 2016 360 780
- US-A1- 2017 245 543
- US-A1- 2018 360 101
- US-B1- 6 499 489

## Description

The invention relates to a method of producing a liquid tobacco extract from two or more different types of tobacco and to a blended liquid tobacco extract produced by such a method.

Aerosol-generating systems for delivering an aerosol to a user that comprise an atomiser configured to generate an inhalable aerosol from a liquid formulation, such as a liquid nicotine formulation, are known. Some known aerosol-generating systems comprise a thermal atomiser such as an electric heater that is configured to heat and vaporise the liquid formulation to generate an aerosol. One popular type of electrically heated aerosol-generating system is an e-cigarette. Other known aerosol-generating systems comprise a non-thermal atomiser that is configured to generate an aerosol from the liquid formulation using, for example, impinging jet, ultrasonic or vibrating mesh technologies.

Several methods for producing liquid tobacco extracts from tobacco material are known. Liquid tobacco extracts may be produced by a high temperature extraction process in which nicotine and other volatile flavour compounds are extracted from tobacco material and collected in a suitable solvent to form a natural liquid tobacco extract.

US 2017/245543 discloses a method of extracting volatiles from tobacco material to make a pre-vapor formulation. The tobacco is heated to a temperature of 50-250 degrees Celsius and the volatiles are collected and combined with a pre-vapor formulation. In some embodiments, there may be first and second heating steps, which are carried out at different times and temperatures to collect different volatiles from the tobacco.

US 2018/360101 discloses a process to obtain tobacco flavour extracts comprising conditioning a mixture of tobaccos by heating the mixture of tobaccos to a temperature of between 30 degrees Celsius and 90 degrees Celsius, recovering emissions produced by conditioning the mixture of tobaccos, and obtaining at least one flavour extract from the recovered emissions. The process further comprises separately recovering emissions produced by the conditioning of each different type of tobacco, obtaining a flavour extract for each separated emission, and blending the flavour extracts obtained from the different types of tobacco.

Maceration methods are also known, wherein a tobacco material is kept in suspension in an extraction liquid for a period of up to several weeks or even months. The resulting slurry is subsequently filtered, and the liquid phase thus collected can be used to manufacture a vaporisable liquid formulation. In one such method - so-called "cold maceration method" - there is generally no way of controlling the extraction conditions (e.g. temperature and pressure). In a variant of a maceration method, which has been described for example in US 2012/192880, the slurry is heated to 100 degrees Celsius or more.

The liquid phase collected upon filtration of the slurry, which represents the primary product of a maceration process, is highly diluted, and tends to have a low content of apolar tobacco flavour species. Additionally, the liquid phase typically contains little to no nicotine. As such, liquid extracts obtained by a maceration method generally need to be supplemented with additional ingredients, such as nicotine salts and glycerin, before being used in a vaporisable liquid formulation.

Alternative processes are known, wherein a tobacco material is substantially boiled in water for a period of hours or even days to form a vapour phase, and a distillate obtained by condensation of the vapour phase is continuously collected in a vessel. Over time, an oily, waxy layer containing a high proportion of apolar compounds builds up on the surface of the distillate.

On the one hand, the aqueous portion, above which the waxy layer builds up, and which contains nicotine and other water-soluble compounds, is recycled to the boiler. An apolar cosolvent may optionally be fed into the boiler with the aqueous portion in order to increase the extraction yield. On the other hand, the waxy phase is collected and ultimately forms the primary product of one such hydro-distillation process. Such product is often referred to as "tobacco essential oil", and contains a high proportion of apolar compounds found in tobacco, such as fatty acids, neophytadiene, etc. The tobacco essential oil obtained by one such method typically contains no nicotine.

It is also known to subject tobacco material to an extraction process involving use of a volatile apolar solvent. Examples of suitable solvents are cyclic or acyclic short alkanes, as well as chlorinated solvents like dichloromethane. In one such process, the excess solvent may be evaporated by controlled heating under vacuum. Typically, this is done in the presence of ethanol, which has a higher boiling point than the extraction solvent, such that even traces of the extraction solvent can be detected.

The primary product of one such solvent-aided extraction process is often referred to as "tobacco absolute", and may contain traces of ethanol. It is a waxy product and contains a highly concentrated mixture of most of the apolar compounds that can be extracted with the specific solvent, generally including nicotine, which is generally present at relatively high concentrations.

An alternative extraction process involves contacting a tobacco material with a solvent under supercritical conditions, such as supercritical carbon dioxide. One such process is disclosed in US 2013/160777, and relies on the principle that volatile substances within a feed material contacted with a supercritical fluid may partition into the supercritical phase. After dissolution of any soluble material, the supercritical fluid containing the dissolved substances can be removed, and the dissolved components of the feed matter can be separated out from the supercritical fluid. The primary product of a supercritical extraction process is substantially similar to the "tobacco absolute" of a solvent-aided extraction process run at lower temperature and pressure, contains no residual solvent and typically has a high level of the waxy, apolar compounds and includes nicotine, which is generally present at relatively high concentrations.

WO 2018/210680 also discloses a method of making a tobacco extract in which tobacco is contacted with a supercritical extraction solvent. In the method of WO 2018/210680, the residual tobacco solids from the supercritical extraction are contacted with an extraction solvent to extract further nicotine, wherein the second extraction takes place at a higher temperature and/or pressure to the first extraction.

However, all the tobacco extracts obtainable by methods known in the art tend to have a very low level - if any - of compounds associated with the flavour of heated tobacco, such as furaneol. In general, as discussed above, liquid tobacco extracts obtained by such known extraction processes may have a low level of nicotine. Further, liquid tobacco extracts obtained by such extraction processes may have a low level and low variety of flavour species. Liquid tobacco extracts obtained by such extraction processes may also have a high level of undesirable compounds.

Furthermore, the concentration of nicotine, flavour species and undesirable compounds obtained by such extraction processes may be significantly impacted by the type or types of tobacco used as a starting material. The composition of the liquid tobacco extract produced from the extraction methods described above may therefore vary significantly between different tobacco types, leading to an inconsistency in the extract and the resultant aerosol generated from the extract.

It would therefore be desirable to provide an improved extraction process for tobacco that enables greater control over the composition of the resultant liquid tobacco extract. It would be particularly desirable to provide such an extraction process that gives a more consistent composition of the liquid tobacco extract, which is affected to a lesser extent by differences in the type of tobacco in the tobacco starting material. It would be further desirable to provide such an extraction process that can maximise the level of desirable flavour compounds in the resultant liquid tobacco extract whilst also minimising undesirable compounds. It would be particularly desirable to provide such an extraction process that can be carried out efficiently using existing apparatus and techniques without the need for significant modification.

According to the present invention there is provided a method of producing a blended liquid tobacco extract, the method comprising the steps of: preparing a first tobacco starting material having a first reducing sugar content S1 and a first nicotine content N1; preparing a second tobacco starting material having a second reducing sugar content S2 and a second nicotine content N2, wherein the second reducing sugar content S2 is higher than the first reducing sugar content S1 of the first tobacco starting material, wherein the first tobacco starting material and the second tobacco starting material are different from each other and wherein the first tobacco starting material and the second tobacco starting material have not been subjected to a prior extraction; heating the first tobacco starting material at a first extraction temperature T1; heating the second tobacco starting material at a second extraction temperature T2, wherein the second extraction temperature T2 is at least 10 degrees Celsius lower than the first extraction temperature T1; collecting the volatile compounds released from the first and second tobacco starting materials during heating; and combining the collected volatile compounds released from the first and second tobacco starting materials and forming a blended liquid tobacco extract from the combined volatile compounds.

As used herein with reference to the invention, the term "liquid tobacco extract" describes the direct product of an extraction process carried out on a tobacco starting material. According to the present invention, the extraction process for producing the liquid tobacco extract comprises heating the tobacco starting material under specific heating conditions and collecting the volatile compounds generated. The liquid tobacco extract therefore consists of the mixture of natural tobacco components that have derived from the tobacco starting material and have been removed during the extraction process, typically in combination with the liquid carrier or solvent.

The term "blended liquid tobacco extract" is used herein to refer to a liquid tobacco extract formed by the method of the present invention by combining and mixing the volatile compounds collected upon separately heating two or more different tobacco starting materials, each tobacco starting material having a different reducing sugar content.

The inventors of the present invention have found that, in contrast to the existing extraction processes that have been discussed above, methods in accordance with the present invention advantageously provide a blended liquid tobacco extract that has a significantly higher content of compounds associated with the flavour of heated tobacco, such as for example furaneol. These compounds are substantially absent, or are present in trace amounts, in a tobacco extract obtained by a maceration process, which also typically contains little to no nicotine. These compounds are also generally absent or present in trace amounts in a tobacco extract obtained using a solvent, including under supercritical conditions. Similarly, a tobacco essential oil obtained by way of a distillation process also typically has a very low content - if any - of such compounds associated with the flavour of heated tobacco.

The blended liquid tobacco extracts obtained by methods in accordance with the invention present significant compositional differences with respect to tobacco extracts obtained by the existing extraction processes, and can be used as an e-liquid or for the preparation of an e-liquid that, when heated, generates an aerosol having a distinct composition and flavour characteristics compared with currently available e-liquids. In particular, blended liquid tobacco extracts obtained by a method in accordance with the invention may be used to generate an aerosol that provides a heated tobacco taste which more closely resembles an aerosol generated by conventional cigarettes or upon heating tobacco in a heat-not-burn device relative to available aerosols produced from existing liquid nicotine compositions.

Extraction methods in accordance with the present invention entail the selection of different extraction temperatures for tobacco starting materials. It has been found that this advantageously increases the flexibility of the extraction process in that it enables the provision of a broader range of liquid tobacco extracts having different compositions. In particular, by selecting a specific extraction temperature for a given tobacco starting material it may be possible to control the level of certain compounds in the liquid tobacco extract. A given tobacco starting material may release different compounds at different temperatures, or the same compounds may be present in the liquid tobacco extract in different proportions. Thus, by providing for the selection of different extraction temperatures for different tobacco products, methods in accordance with the invention may also allow a finer control of the ratio between the contents of specific compounds in a liquid tobacco extract.

In preferred embodiments, as will be explained in more detail below, the extraction methods of the present invention provide for the selection of different extraction temperatures for tobacco starting materials, in particular tobacco starting materials having at least one of different reducing sugar contents or different nicotine contents to each other. The step of heating the tobacco starting material to release volatile components is carried out on each tobacco starting material separately, at an appropriate extraction temperature which may be selected based on the reducing sugar content or the nicotine content or both. The heating step of the extraction process can therefore be specifically controlled according to the type of tobacco in the tobacco starting material to produce the optimum composition of the liquid tobacco extract for that type of tobacco. The resultant volatile components collected from each of the tobacco starting materials can then further be combined at an appropriate ratio in order to provide a blended liquid tobacco extract having the desired composition and flavour characteristics.

The extraction method of the present invention therefore advantageously provides a much greater degree of control over the extraction conditions which in turn provides improved control over the composition of the blended liquid tobacco extract. In particular, by controlling the extraction temperature of the different tobacco starting materials according to reducing sugar content or nicotine content or both, and then blending the collected volatile components from each tobacco starting material, it is advantageously possible to adjust and optimise the levels of individual desired and undesired tobacco compounds.

In the method of the present invention, a specific extraction temperature is selected for each tobacco starting material, preferably based on at least one of the reducing sugar content and the nicotine content of that tobacco starting material, as described in more detail below. Upon heating of a tobacco starting material, volatile furan compounds, such as 2-furanmethanol, are generated from the reducing sugars present in the tobacco and will be included in the volatile compounds collected during the extraction process. It is generally preferable to minimise the content of furan compounds such as 2-furanmethanol in the liquid tobacco extract, since these undesirable compounds are found to be released directly into the aerosol generated upon heating of the liquid tobacco extract in an aerosol-generating device.

It has been found by the inventors of the present invention that for certain tobacco types, the level of 2-furanmethanol released during extraction is dependent upon the extraction temperature. For Burley tobaccos, the reducing sugar content is typically very low (below 2 percent by weight) and an increase in the extraction temperature has very little effect on the level of 2-furanmethanol released during the extraction process. On the other hand, Bright tobaccos typically have a much higher reducing sugar content (up to 25 percent by weight) and the amount of 2-furanmethanol released upon heating is found to vary significantly depending on the extraction temperature, with a direct correlation between the extraction temperature and the level of 2-furanmethanol released. The degree of increase in the level of 2-furanmethanol released from the Bright tobacco with increasing extraction temperature may be different for each tobacco type. The present invention provides a method in which the extraction temperature can be adjusted to take into account such differences.

It has also been found by the inventors of the present invention that nicotine is typically present in a higher percentage by weight in extracts produced from Burley tobacco relative to bright tobacco. Further, the amount of nicotine released during heating is dependent upon the extraction temperature. In more detail, the nicotine content in bright tobacco extracts is typically relatively low (below 5 percent by weight) and an increase in the extraction temperature has a limited effect on the level of nicotine released during the extraction process. On the other hand, Burley tobacco extracts typically have a much higher nicotine content (up to about 10 percent by weight), and the amount of nicotine released upon heating is found to vary more significantly depending on the extraction temperature, with a direct correlation between the extraction temperature and the level of nicotine released. The present invention provides a method in which the extraction temperature may be adjusted to take into account such differences.

In the method according to the present invention, the selection of an appropriate extraction temperature for each tobacco starting material, preferably based on the reducing sugar content or the nicotine content, can advantageously provide an extract from that tobacco starting material with a minimised level of 2-furanmethanol. The extraction temperature can additionally be selected such that at the same time as minimising the level of 2-furanmethanol, the levels of desirable compounds such as nicotine and flavour compounds can be maximised. An improved blended liquid tobacco extract having a significantly improved balance of desirable compounds to undesirable compounds can therefore be provided.

The method of the present invention enables a more consistent liquid tobacco extract to be provided, despite differences in the tobacco types on the tobacco starting material. A greater degree of flexibility over the combination of different tobacco types can therefore be provided since extraction from each tobacco type can be individually adjusted to ensure consistency of the final, blended liquid tobacco extract.

Furthermore, the extraction method of the present invention enables a natural tobacco extract to be produced which has the desired levels of nicotine and flavour compounds without the need for addition of such compounds after extraction. The resultant blended liquid tobacco extract can therefore advantageously be used directly to provide a liquid formulation for use in an e-cigarette or other aerosol-generating system.

In many cases, the tobacco starting material can be heated without the need for significant pre-treatment steps. The extraction method can therefore be carried out efficiently.

The extraction method as defined can advantageously be carried out using existing apparatus and techniques, which can be readily modified in order to carry out the method steps of the present invention.

In the method of the present invention, the first tobacco starting material and the second tobacco starting material are different from each other. According to the invention, two different tobacco starting materials are provided: a first tobacco starting material having a first reducing sugar content S1 and a first nicotine content N1, and a second tobacco starting material having a second reducing sugar content S2 and a second nicotine content N2.

According to the invention, S2 is higher than S1. The reducing sugar content of the second tobacco starting material is therefore higher than the reducing sugar content of the first tobacco starting material. The difference between S2 and S1 will depend upon the tobacco types selected to provide the tobacco starting materials. S2 may be at least about 2 percent higher than S1, or at least about 5 percent higher or at least about 10 percent higher. S2 may be no more than about 25 percent higher than S1, or no more than about 20 percent higher than S1 or no more than about 15 percent higher than S1.

In these embodiments, the tobacco starting material having the higher reducing sugar content S2 is heated at the lower extraction temperature T2. On the other hand, the tobacco starting material having the lower reducing sugar content S1 is heated at the higher extraction temperature T1. The inventors have surprisingly found that this may advantageously help increase the ratio between the content of flavour species and the content of 2-furanmethanol in the blended liquid tobacco extract.

In some embodiments, N2 is lower than N1. The nicotine content of the second tobacco starting material is therefore lower than the nicotine content of the first tobacco starting material. The difference between N1 and N2 will depend upon the tobacco types selected to provide the tobacco starting materials. N2 may be at least about 1 percent lower than N1, or at least about 2 percent lower or at least about 5 percent lower. N2 may be no more than about 15 percent lower than N1, or no more than about 12 percent lower than N1 or no more than about 10 percent lower than N1. In these embodiments, the tobacco starting material having the higher nicotine content N1 is heated at the higher extraction temperature T1. On the other hand, the tobacco starting material having the lower nicotine sugar content N2 is heated at the lower extraction temperature T2.

The inventors have surprisingly found that this may advantageously help increase the ratio between the content of nicotine and the content of phenol in the blended liquid tobacco extract.

The first starting material and the second starting material have not been subjected to an extraction prior to the method of the present invention being carried out.

An extraction temperature is preferably selected for each tobacco starting material, based on the reducing sugar content of that tobacco starting material. Typically, the higher the reducing sugar content, the lower the extraction temperature will be in order to reduce the level of 2-furanmethanol released upon heating. For each tobacco starting material, an extraction temperature may be selected in order to obtain a desired balance between the level of 2-furanmethanol and the level of desired compounds such as nicotine and flavour compounds.

The first tobacco starting material is heated at a first extraction temperature T1. The second tobacco starting material is heated at a second extraction temperature T2, wherein T2 is lower than T1. T2 is selected to be lower than T1 in view of the higher reducing sugar content of the second tobacco starting material compared to the first tobacco starting material.

An extraction temperature may also be selected for each tobacco starting material based on the nicotine content of that tobacco starting material. Typically, the lower the nicotine content, the higher the extraction temperature will be in order to maximise the level of nicotine released upon heating.

Preferably, the first and second extraction temperatures are selected from within the range of about 100 degrees Celsius to about 160 degrees Celsius.

The first temperature T1 may be above about 120 degrees Celsius and the second temperature T2 may be below about 120 degrees Celsius. The first temperature T1 may be above about 130 degrees Celsius and the second temperature T2 may be below about 130 degrees Celsius. The first temperature T1 may be above about 140 degrees Celsius and the second temperature T2 may be below about 140 degrees Celsius. The first temperature T1 may be above about 150 degrees Celsius and the second temperature T2 may be below about 150 degrees Celsius.

The first temperature T1 may be above about 120 degrees Celsius and the second temperature T2 may be below about 110 degrees Celsius.

The first temperature T1 may be above about 130 degrees Celsius and the second temperature T2 may be below about 120 degrees Celsius. The first temperature T1 may be above about 130 degrees Celsius and the second temperature T2 may be below about 110 degrees Celsius.

The first temperature T1 may be above about 140 degrees Celsius and the second temperature T2 may be below about 130 degrees Celsius. The first temperature T1 may be above about 140 degrees Celsius and the second temperature T2 may be below about 120 degrees Celsius. The first temperature T1 may be above about 140 degrees Celsius and the second temperature T2 may be below about 110 degrees Celsius.

The first temperature T1 may be above about 150 degrees Celsius and the second temperature T2 may be below about 140 degrees Celsius. The first temperature T1 may be above about 150 degrees Celsius and the second temperature T2 may be below about 130 degrees Celsius. The first temperature T1 may be above about 150 degrees Celsius and the second temperature T2 may be below about 120 degrees Celsius. The first temperature T1 may be above about 150 degrees Celsius and the second temperature T2 may be below about 110 degrees Celsius.

Preferably, each extraction temperature is at least about 110 degrees Celsius, more preferably at least about 115 degrees Celsius, more preferably at least about 120 degrees Celsius, more preferably at least about 125 degrees Celsius.

Preferably, each extraction temperature is no more than about 150 degrees Celsius, more preferably no more than about 145 degrees Celsius, more preferably no more than about 140 degrees Celsius, most preferably no more than about 135 degrees Celsius.

For example, each extraction temperature may be between about 110 degrees Celsius and 150 degrees Celsius, or between about 120 degrees Celsius and about 140 degrees Celsius, or between about 125 degrees Celsius and about 135 degrees Celsius, or about 130 degrees Celsius. Alternatively, each extraction temperature may be between about 110 degrees Celsius and about 130 degrees Celsius, or between about 115 degrees Celsius and about 125 degrees Celsius, or about 120 degrees Celsius. Alternatively, each extraction temperature may be between about 120 degrees Celsius and about 150 degrees, more preferably between about 125 degrees Celsius and about 145 degrees Celsius, or about 135 degrees Celsius.

A difference (T1-T2) between the first temperature T1 and the second temperature T2 is at least about 1 degree Celsius, preferably at least about 2 degrees Celsius, even more preferably at least 5 degrees Celsius.

The difference (T1-T2) between the first temperature T1 and the second temperature T2 is at least about 10 degrees Celsius. More preferably, the difference (T1-T2) between the first temperature T1 and the second temperature T2 is at least about 15 degrees Celsius. Even more preferably, the difference (T1-T2) between the first temperature T1 and the second temperature T2 is at least about 20 degrees Celsius.

In particularly preferred embodiments, the difference (T1-T2) between the first temperature T1 and the second temperature T2 is at least about 25 degrees Celsius, more preferably at least about 30 degrees Celsius, even more preferably at least about 35 degrees Celsius, most preferably at least about 40 degrees Celsius.

Preferably, the difference between the first and second extraction temperatures (T1-T2) is determined based on the difference between the first and second reducing sugar contents of the first and second tobacco starting materials (S2-S1). This means that the greater the difference between the reducing sugar contents (S2-S1), the greater the difference between the extraction temperatures (T1-T2) in order to ensure that the level of 2-furanmethanol in the blended liquid tobacco extract is minimised.

Preferably, the difference between the first and second extraction temperatures (T1-T2) corresponds to at least 0.5 degrees Celsius per 1 percent difference between the first and second reducing sugar contents (S2-S1). In other words, if the second reducing sugar content S2 is higher than the first reducing sugar content S1 by a value of x percent, the first extraction temperature T1 will be higher than the second extraction temperature T2 by a value of 0.5x degrees Celsius. For example, if S2 is 20 percent by weight and S1 is 10 percent by weight, giving a difference between S2 and S1 of 10 percent by weight, the first extraction temperature T1 is preferably at least 5 degrees higher than the second extraction temperature T2.

More preferably, the difference between the first and second extraction temperatures (T1-T2) corresponds to at least 1 degree Celsius for every 1 percent difference between the first and second reducing sugar contents (S2-S1), more preferably at least 2 degrees Celsius for every 1 percent difference between the first and second reducing sugar contents (S2-S1).

Preferably, the difference between the first and second extraction temperatures (T1-T2) corresponds to no more than 10 degrees Celsius for every 1 percent difference between the first and second reducing sugar contents (S2-S1), more preferably no more than 8 degrees Celsius for every 1 percent difference between the first and second reducing sugar contents (S2-S1) and more preferably no more than about 6 degrees Celsius for every 1 percent difference.

Alternatively or in addition, the percentage difference between the first and second extraction temperatures is preferably at least about 0.5 times the percentage difference between the first and second reducing sugar contents (S2-S1). This corresponds to a ratio of at least 0.5 between the percentage difference in the first and second extraction temperature and the percentage difference between the first and second reducing sugar contents (S2 -S1). Since T1 is defined as the higher extraction temperature, the percentage difference between T1 and T2 can be calculated by subtracting T2 from T1 (corresponding to T1-T2) and dividing by T2.

More preferably, the percentage difference between the first and second extraction temperatures is at least about 1 times the percentage difference between the first and second reducing sugar contents (S2-S1), more preferably at least about 2 times the percentage difference between the first and second reducing sugar contents (S2 -S1).

Preferably, the percentage difference between the first and second extraction temperatures is no more that about 6 times the percentage difference between the first and second reducing sugar contents (S2-S1), more preferably no more than about 4 times the percentage difference between the first and second reducing sugar contents (S2-S1).

The second reducing sugar content S2 may be above about 2 percent by weight and the first reducing sugar content S1 may be below about 2 percent by weight. The second reducing sugar content S2 may be above about 5 percent by weight and the first reducing sugar content S1 may be below about 5 percent by weight. The second reducing sugar content S2 may be above about 10 percent by weight and the first reducing sugar content S1 may be below about 10 percent by weight. The second reducing sugar content S2 may be above about 15 percent by weight and the first reducing sugar content S1 may be below about 15 percent by weight. The second reducing sugar content S2 may be above about 20 percent by weight and the first reducing sugar content S1 may be below about 20 percent by weight.

The second reducing sugar content S2 may be above about 5 percent by weight and the first reducing sugar content S1 may be below about 2 percent by weight.

The second reducing sugar content S2 may be above about 10 percent by weight and the first reducing sugar content S1 may be below about 5 percent by weight. The second reducing sugar content S2 may be above about 10 percent by weight and the first reducing sugar content S1 may be below about 2 percent by weight.

The second reducing sugar content S2 may be above about 15 percent by weight and the first reducing sugar content S1 may be below about 10 percent by weight. The second reducing sugar content S2 may be above about 15 percent by weight and the first reducing sugar content S1 may be below about 5 percent by weight. The second reducing sugar content S2 may be above about 15 percent by weight and the first reducing sugar content S1 may be below about 2 percent by weight.

The second reducing sugar content S2 may be above about 20 percent by weight and the first reducing sugar content S1 may be below about 15 percent by weight. The second reducing sugar content S2 may be above about 20 percent by weight and the first reducing sugar content S1 may be below about 10 percent by weight. The second reducing sugar content S2 may be above about 20 percent by weight and the first reducing sugar content S1 may be below about 5 percent by weight. The second reducing sugar content S2 may be above about 20 percent by weight and the first reducing sugar content S1 may be below about 2 percent by weight.

By way of example, the nicotine content in Burley tobacco is typically quite high and in the range from about 1.5 percent by weight to about 4.5 percent by weight. The reducing sugar content in Burley tobacco is typically rather low and generally below about 2 percent by weight, even more commonly below about 1 percent by weight. Thus, in methods in accordance with the present invention, Burley tobacco may be a suitable tobacco starting material to be heated to a comparatively high extraction temperature.

As a further example, the nicotine content in Oriental tobacco is typically rather low and in the range from about 0.7 percent by weight to about 2.5 percent by weight. The reducing sugar content in Oriental tobacco is typically rather high and may range from about 7 percent by weight to about 14 percent by weight. Thus, in methods in accordance with the present invention, Oriental tobacco may be a suitable tobacco starting material to be heated to a comparatively low extraction temperature.

As another example, the nicotine content in flue cured tobacco is typically quite high and comparable to that of Burley tobacco, as it may range from about 1 percent by weight to about 4.5 percent by weight. The reducing sugar content in flue cured tobacco is typically high and may vary over a rather broad range, for example from about 2.5 percent by weight to about 27 percent by weight. Thus, in methods in accordance with the present invention, flue cured tobacco may be a suitable tobacco starting material to be heated at comparatively higher or lower extraction temperatures depending on which compounds are considered to be especially desirable. If the aim is, for example, maximising a nicotine content to phenol content ratio, a comparatively lower extraction temperature may be preferable. If the aim is, as another example, maximising a flavour species content to 2-furanmethanol content ratio, a comparatively higher extraction temperature may be preferable.

In certain preferred embodiments, the second reducing sugar content is at least 10 percent greater than the first reducing sugar content and the first extraction temperature is preferably at least about 10 degrees Celsius higher than the second extraction temperature, more preferably at least 20 degrees Celsius higher.

A difference (S2-S1) between the second reducing sugar content S2 and the first reducing sugar content S1 may be at least about 1 percent by weight, preferably at least about 2 percent by weight, even more preferably at least about 5 percent by weight.

In some embodiments, the difference (S2-S1) between the second reducing sugar content S2 and the first reducing sugar content S1 is at least about 10 percent by weight, more preferably at least about 12 percent by weight, even more preferably at least about 15 percent by weight.

In other embodiments, the difference (S2-S1) between the second reducing sugar content S2 and the first reducing sugar content S1 is at least about 20 percent by weight, more preferably at least about 22 percent by weight, even more preferably at least about 25 percent by weight.

An extraction temperature may also be selected for each tobacco starting material based on the nicotine content of that tobacco starting material. In preferred embodiments, where the second nicotine content N2 is lower than the first nicotine content N1, the difference between the first and second extraction temperatures (T1-T2) corresponds to at least 0.5 degrees Celsius per 1 percent difference between the second and first nicotine contents (N1-N2).

The first nicotine content N1 may be above about 1 percent by weight and the second nicotine content N2 may be below about 1 percent by weight. The first nicotine content N1 may be above about 1.5 percent by weight and the second nicotine content N2 may be below about 1.5 percent by weight. The first nicotine content N1 may be above about 2 percent by weight and the second nicotine content N2 may be below about 2 percent by weight. The first nicotine content N1 may be above about 2.5 percent by weight and the second nicotine content N2 may be below about 2.5 percent by weight. The first nicotine content N1 may be above about 3 percent by weight and the second nicotine content N2 may be below about 3 percent by weight. The first nicotine content N1 may be above about 3.5 percent by weight and the second nicotine content N2 may be below about 3.5 percent by weight. The first nicotine content N1 may be above about 4 percent by weight and the second nicotine content N2 may be below about 4 percent by weight.

The first nicotine content N1 may be above about 1.5 percent by weight and the second nicotine content N2 may be below about 1 percent by weight.

The first nicotine content N1 may be above about 2 percent by weight and the second nicotine content N2 may be below about 1.5 percent by weight. The first nicotine content N1 may be above about 2 percent by weight and the second nicotine content N2 may be below about 1 percent by weight.

The first nicotine content N1 may be above about 2.5 percent by weight and the second nicotine content N2 may be below about 2 percent by weight. The first nicotine content N1 may be above about 2.5 percent by weight and the second nicotine content N2 may be below about 1.5 percent by weight. The first nicotine content N1 may be above about 2 percent by weight and the second nicotine content N2 may be below about 1 percent by weight.

The first nicotine content N1 may be above about 3 percent by weight and the second nicotine content N2 may be below about 2.5 percent by weight. The first nicotine content N1 may be above about 3 percent by weight and the second nicotine content N2 may be below about 2 percent by weight. The first nicotine content N1 may be above about 3 percent by weight and the second nicotine content N2 may be below about 1.5 percent by weight. The first nicotine content N1 may be above about 3 percent by weight and the second nicotine content N2 may be below about 1 percent by weight.

The first nicotine content N1 may be above about 3.5 percent by weight and the second nicotine content N2 may be below about 3 percent by weight. The first nicotine content N1 may be above about 3.5 percent by weight and the second nicotine content N2 may be below about 2.5 percent by weight. The first nicotine content N1 may be above about 3.5 percent by weight and the second nicotine content N2 may be below about 2 percent by weight. The first nicotine content N1 may be above about 3.5 percent by weight and the second nicotine content N2 may be below about 1.5 percent by weight. The first nicotine content N1 may be above about 3.5 percent by weight and the second nicotine content N2 may be below about 1 percent by weight.

The first nicotine content N1 may be above about 4 percent by weight and the second nicotine content N2 may be below about 3.5 percent by weight. The first nicotine content N1 may be above about 4 percent by weight and the second nicotine content N2 may be below about 3 percent by weight. The first nicotine content N1 may be above about 4 percent by weight and the second nicotine content N2 may be below about 2.5 percent by weight. The first nicotine content N1 may be above about 4 percent by weight and the second nicotine content N2 may be below about 2 percent by weight. The first nicotine content N1 may be above about 4 percent by weight and the second nicotine content N2 may be below about 1.5 percent by weight. The first nicotine content N1 may be above about 4 percent by weight and the second nicotine content N2 may be below about 1 percent by weight.

A difference (N1-N2) between the first nicotine content N1 and the second nicotine content N2 may be at least about 0.5 percent by weight, preferably at least about 1 percent by weight, even more preferably at least about 1.5 percent by weight.

In some embodiments, the difference (N1-N2) between the first nicotine content N1 and the second nicotine content N2 is preferably at least about 2 percent by weight, more preferably at least about 2.5 percent by weight, even more preferably at least about 3 percent by weight, most preferably at least about 3.5 percent by weight.

As an example, the first tobacco starting material may have a reducing sugar content S1 below about 5 percent by weight or below about 4 percent by weight or below about 3 percent by weight or below about 2 percent by weight or below about 1 percent by weight. The second tobacco starting material may have a reducing sugar content S2 above about 5 percent by weight or above about 7 percent by weight or above about 9 percent by weight or above about 11 percent by weight. The first tobacco starting material may have a nicotine content N1 above about 2 percent by weight or above about 3 percent by weight or above about 4 percent by weight. The second tobacco starting material may have a nicotine content N2 below about 3 percent by weight or below about 2 percent by weight or below about 1 percent by weight. The first tobacco starting material may be heated at about 130 degrees Celsius. The second tobacco starting material may be heated at about 110 degrees Celsius.

The duration of the heating step may optionally also be controlled in order to provide a further degree of control over the composition of the extract derived from each tobacco starting material. Preferably, each tobacco starting material is heated at the extraction temperature for at least about 90 minutes, more preferably at least about 120 minutes. This extraction time should be sufficiently long that the desired tobacco flavour compounds can be extracted efficiently to provide a liquid tobacco extract that can produce an aerosol having the desired flavour characteristics.

Preferably, each tobacco starting material is heated at the extraction temperature for no more than about 270 minutes, more preferably no more than about 180 minutes.

For example, each tobacco starting material may be heated for between about 90 minutes and about 270 minutes, or between about 120 minutes and about 180 minutes. The heating time for the first and second tobacco starting materials may be the same or different.

The heating time indicated above corresponds to the duration of time over which the tobacco starting material is heated at the corresponding extraction temperature and does not include the time taken to increase the temperature of the tobacco starting material up to the extraction temperature.

Preferably, each extraction temperature is selected such that the collected volatile compounds from the corresponding tobacco starting material contains no more than about 0.8 milligrams of 2-furanmethanol per gram of tobacco starting material, more preferably no more than about 0.6 milligrams of 2-furanmethanol per gram of tobacco starting material.

Preferably, the first and second extraction temperatures are selected such that the blended liquid tobacco extract contains no more than 1.0 milligrams of 2-furanmethanol per gram of tobacco starting material (based on the combined weight of the first tobacco starting material and the second tobacco starting material), more preferably no more than 0.8 milligrams of 2-furanmethanol per gram of tobacco starting material.

Preferably, the first and second extraction temperatures are selected to provide a nicotine content in the blended liquid tobacco extract of at least 0.1 percent by weight, more preferably at least about 0.2 percent by weight, even more preferably at least about 0.5 percent by weight. Preferably, the first and second extraction temperatures are selected to provide a nicotine content of no more than about 12 percent by weight, more preferably no more than about 10 percent by weight, even more preferably no more than about 8 percent by weight.

In some embodiments, the first and second extraction temperatures are selected to provide a nicotine content in the blended liquid tobacco extract of from about 0.1 percent by weight to about 12 percent by weight or from about 0.1 percent by weight to about 10 percent by weight or from about 0.1 percent by weight to about 8 percent by weight. In other embodiments, the first and second extraction temperatures are selected to provide a nicotine content in the blended liquid tobacco extract of from about 0.2 percent by weight to about 12 percent by weight or from about 0.2 percent by weight to about 10 percent by weight or from about 0.2 percent by weight to about 8 percent by weight. In further embodiments, the first and second extraction temperatures are selected to provide a nicotine content in the blended liquid tobacco extract of from about 0.5 percent by weight to about 12 percent by weight or from about 0.5 percent by weight to about 10 percent by weight or from about 0.5 percent by weight to about 8 percent by weight.

Preferably, the first and second extraction temperatures are selected to provide a ratio by weight of (β-ionone + β-damascenone) to (phenol) of at least about 0.25 in the liquid tobacco extract. More preferably, the first and second extraction temperatures are selected to provide a ratio by weight of (β-ionone + β-damascenone) to (phenol) of at least about 0.5, even more preferably at least about 1, most preferably at least about 1.5 in the liquid tobacco extract. In particularly preferred embodiments, the first and second extraction temperatures are selected to provide a ratio by weight of (β-ionone + β-damascenone) to (phenol) of at least about 2 and most preferably such that ratio by weight of (β-ionone + β-damascenone) to (phenol) is from about 2 to about 10 or from about 2 to about 5 in the liquid tobacco extract.

β-damascenone and β-ionone are desirable compounds associated with tobacco flavour. It has been found that the amount of β-damascenone and β-ionone released from a tobacco material will increase with increasing the extraction temperature up to a certain peak extraction temperature, after which the level will begin to decrease. The peak extraction temperature for such flavour compounds is typically within the range of 100 degrees Celsius to 160 degrees Celsius such that the level of desirable flavour compounds can be effectively tailored and controlled in the extraction method.

Preferably, the first and second extraction temperatures are selected to provide a ratio by weight of (furaneol + (2,3-diethyl-5-methylpyrazine)*100)) to (nicotine) of at least about 5 x 10⁻⁴ in the liquid tobacco extract. More preferably, the first and second extraction temperatures are selected to provide a ratio by weight of (furaneol + (2,3-diethyl-5-methylpyrazine)*100)) to (nicotine) of at least about 8 x 10⁻⁴ in the liquid tobacco extract. Even more preferably, the first and second extraction temperatures are selected to provide a ratio by weight of (furaneol + (2,3-diethyl-5-methylpyrazine)*100)) to (nicotine) of at least about 1 × 10⁻³ in the liquid tobacco extract. The first and second extraction temperatures are preferably selected to provide a ratio by weight of (furaneol + (2,3-diethyl-5-methylpyrazine)*100)) to (nicotine) of less than or equal to about 9 x 10⁻³ in the liquid tobacco extract. More preferably, the first and second extraction temperatures are selected to provide a ratio by weight of (furaneol + (2,3-diethyl-5-methylpyrazine)*100)) to (nicotine) of less than or equal to about 5 x 10⁻³ in the liquid tobacco extract.

In some preferred embodiments, the first and second extraction temperatures are selected to provide a ratio by weight of (furaneol + (2,3-diethyl-5-methylpyrazine)*100)) to (nicotine) of from about 8 × 10⁻⁴ to about 9 x 10⁻³ or from about 8 × 10⁻⁴ to about 5 × 10⁻³ or from about 1 × 10⁻³ to about 9 × 10⁻³ or from about 1 × 10⁻³ to about 5 × 10⁻³ in the liquid tobacco extract.

It has been found that in methods in accordance with the present invention wherein the first and second extraction temperatures are selected to provide ratios within the ranges described above, particularly good sensory profiles may be attained when nicotine compositions prepared from liquid tobacco extracts are heated to generate an aerosol. For a specific tobacco compound, the variation in the level of release of the compound with extraction temperature during the extraction process can be readily determined for any given tobacco starting material. For example, it has been found that the level of nicotine released from a tobacco starting material will typically increase with increasing extraction temperature. The rate of increase has been found to vary for different tobacco types.

It has also been found that the level of desirable tobacco flavour compounds, such as β-damascenone and β-ionone, released from a tobacco material will increase with increasing extraction temperature up to a certain peak extraction temperature, after which the level will begin to decrease. The peak extraction temperature for such flavour compounds is typically within the range of 100 degrees Celsius to 160 degrees Celsius such that the level of desirable flavour compounds can be effectively optimised in the extraction method of the present invention.

In the method of the present invention, it is therefore possible to identify an extraction temperature for a specific tobacco starting material which provides an optimised balance between the level of desirable compounds such as nicotine and certain flavour compounds, and the level of 2-furanmethanol.

As described above, for each of the first and second tobacco starting materials, the heating step is conducted separately, at the selected extraction temperature.

For each tobacco starting material, the heating step is preferably carried out in an inert atmosphere. Preferably, a flow of an inert gas, such as nitrogen, is passed through the tobacco starting material during the heating step. In some cases, a flow of a combination of an inert gas with water or steam may be used. The addition of water or steam to the tobacco during extraction has been found to increase yield of extracted components. However, excess addition of water or steam leads to processing difficulties such as stickiness of the tobacco material.

The volatile tobacco compounds are released into the flow of inert gas during the heating step such that the inert gas (or combination of inert gas with water or steam) acts as a carrier for the volatile components. The inert gas flow rate may be optimised based on the scale and geometry of the extraction chamber. A relatively high flow rate of inert gas may advantageously improve the efficiency of extraction from the tobacco starting material.

In general, upon heating the tobacco starting material, any moisture present in the tobacco starting material is also released with the volatile compounds, in the form of steam.

The flow of inert gas helps convey the steam generated by evaporation of the moisture content of the tobacco starting material and the volatile compounds - including, in particular, nicotine or flavour-associated compounds or both - out of the extraction equipment.

Further, use of a flow of inert gas, such as nitrogen, under light over-pressure in the extraction equipment has the benefit of preventing the presence of oxygen within the extraction equipment. This is desirable in that it prevents risk of any, even partial, combustion of the tobacco starting material during the heating step. Uncontrolled combustion of the tobacco starting material would clearly be undesirable as it would represent a major safety risk within the manufacturing environment. However, the inventors have found that even a limited, partial combustion of the tobacco starting material may lead to a decrease in the quality of the tobacco extract obtainable by the method, which would be undesirable.

Without wishing to be bound by theory, it is understood that, by preventing combustion of the tobacco starting material, the formation of any undesirable combustion by-products is also prevented. Further, as conditions that would be conducive to combustion of the tobacco starting material are prevented, the tobacco starting material is effectively heated under conditions that mimic, to an extent, conditions under which a tobacco-containing substrate (e.g. homogenised tobacco material) is typically heated in "heat-not-burn" articles. As a result, selective extraction of the flavour-bearing volatile species responsible for the taste consumers associate with heated tobacco is advantageously favoured.

Therefore, by carrying out the heating step in an inert atmosphere, the extraction efficiency, product quality and manufacturing safety are advantageously enhanced.

The heating of the tobacco starting material in a flow of inert gas has the additional benefit that the inert gas flow containing the volatile compounds may be more easily directed into a container containing an extraction solvent, such as a non-aqueous extraction liquid solvent.

Optionally, the heating step may be carried out under vacuum. This removes any oxygen present within the extraction chamber, which may advantageously prevent reaction of the tobacco starting material or volatile compounds generated upon heating of the tobacco starting material with oxygen. The removal of oxygen will also prevent any combustion of the tobacco starting material, as described above.

Suitable heating methods for carrying out the heating of the tobacco starting material would be known to the skilled person and include but are not limited to: dry distillation, hydrodistillation, vacuum distillation, flash distillation and thin film hydrodistillation.

Preferably, each of the first tobacco starting material and the second tobacco starting material comprises a single type of natural tobacco. This enables the extraction temperature and other extraction conditions to be adjusted very specifically to suit the exact tobacco type. Any blending of the tobacco types is then advantageously carried out at the end of the extraction process, with the collected volatile compounds from each of the tobacco starting materials. Alternatively, each of the first tobacco starting material and the second tobacco starting material may comprise a combination of two or more natural tobacco types.

The first tobacco starting material and the second tobacco starting material may be different tobacco types to each other, or different tobacco strains.

Preferably, the first tobacco starting material is a Burley tobacco and the second tobacco starting material is a Bright tobacco. The inclusion of a Burley tobacco advantageously enables a relatively high level of nicotine to be provided whilst the combination with Bright tobacco provides desirable flavour characteristics to the resultant aerosol generated from the blended liquid tobacco extract.

The term "natural tobacco" is used herein with reference to the present invention to describe any part of any plant member of the genus *Nicotiana,* including, but not limited to, leaves, midribs, stems and stalks. In particular, the natural tobacco may comprise flue-cured tobacco material, Burley tobacco material, Oriental tobacco material, Maryland tobacco material, dark tobacco material, dark-fired tobacco material, Rustica tobacco material, as well as material from other rare or specialty tobaccos, or blends thereof. As will be described in more detail below, the tobacco material may be whole (for example, whole tobacco leaves), shredded, cut or ground.

Each of the tobacco starting materials may be a solid tobacco material, such as a powder, leaf scraps or shreds, or intact leaf. Alternatively, each of the tobacco starting materials may be a liquid tobacco material such as a dough, gel, slurry, or suspension. The first and second tobacco starting materials may be of the same form, or a different form.

Each of the tobacco starting materials may be derived from any suitable tobacco material, including but not limited to tobacco leaf, tobacco stem, reconstituted tobacco, cast tobacco, extruded tobacco or tobacco derived pellets.

Preferably, each of the tobacco starting materials is in the form of dried and cured tobacco leaf. The tobacco leaf may have been cut or shredded prior to the method of the present invention being carried out.

Preferably, in the step of preparing each of the tobacco starting materials, the tobacco is ground or cut in order to reduce the size of tobacco particles within the tobacco starting material. This advantageously improves the homogeneity of heating of the tobacco starting material and improves the efficiency of the extraction.

In each case, the tobacco starting material may optionally be dried prior to the heating step in order to decrease the water content of the tobacco starting material. Drying of the tobacco starting material may be carried out by any suitable chemical or physical drying process. Alternatively, water may be added to the tobacco starting material prior to the heating step in order to increase the water content of the tobacco starting material.

In certain embodiments of the present invention, the step of preparing each of the tobacco starting materials may comprise the step of impregnating the tobacco starting material with an aerosol former. When this impregnation of the tobacco starting material is carried out prior to the heating step, it may advantageously increase the amount of certain desirable tobacco compounds that are released from the tobacco starting material upon heating. For example, impregnation of the tobacco starting material with glycerin has been found to advantageously increase the amount of nicotine that is extracted from the tobacco starting material. In another example, impregnation of the tobacco starting material with a polar aerosol former such as a mixture of propylene glycol and vegetal glycerin, or triacetin, has been found to advantageously increase the amount of flavour compounds that are extracted from the tobacco starting material.

Optionally, each of the tobacco starting materials may be digested enzymatically prior to the heating step. This has been found to provide a significant increase in the yield of certain flavour compounds from the tobacco starting material.

Preferably, in the step of preparing the tobacco starting materials, the tobacco is not subjected to any treatment adapted to alter the pH of the tobacco. In particular, in the step of preparing the tobacco starting materials, the tobacco is not subjected to any treatment adapted to significantly increase the pH of the tobacco. For example, the tobacco starting materials are not contacted with an aqueous solution containing a salt of an alkali or alkali-earth metal. Advantageously it has been found that maintaining the tobacco material in a less modified state may provide a more authentic or more natural flavour profile which may be appreciated by a consumer.

In order to determine the reducing sugar content of each of the tobacco starting materials, the tobacco starting materials may be analysed prior to the heating step. This may additionally provide other information about the composition of the tobacco starting material, for example, the content of alkaloids. Such information may assist in the establishment of the optimum extraction conditions. In some cases, the reducing sugar content of a particular type of tobacco may already be well established and form part of the common general knowledge of the skilled person, such that an additional analysis step of the tobacco starting material is not required.

During the heating of each of the tobacco starting materials, volatile compounds are released in gaseous form from the tobacco starting material. The volatile compounds are collected using any suitable technique. Where the tobacco starting material is heated in a flow of an inert gas, as described above, the volatile compounds are collected from the inert gas flow. Different collection methods would be well known to the skilled person.

In certain preferred embodiments, the step of collecting the volatile compounds uses an absorption technique in which the volatile compounds are trapped in a liquid solvent. For example, an inert gas flow containing the volatile compounds may be directed into a container of a liquid solvent. The liquid solvent is preferably an aerosol former such as triacetin, glycerin, propylene glycol or combinations thereof. The use of an aerosol former as the liquid solvent is potentially beneficial because the aerosol former can be retained as a diluting agent in the final liquid tobacco extract. This means that an additional step of removing the solvent is not necessarily required.

As used herein with reference to the present invention, the term "aerosol former" refers to a compound or mixture of compounds that, in use, facilitates formation of an aerosol, and that preferably is substantially resistant to thermal degradation at the operating temperature of the aerosol-generating article or device. Examples of suitable aerosol-formers include: polyhydric alcohols, such as propylene glycol, triethylene glycol, 1,3-butanediol and glycerin; esters of polyhydric alcohols, such as glycerol mono-, di- or triacetate; and aliphatic esters of mono-, di- or polycarboxylic acids, such as dimethyl dodecanedioate and dimethyl tetradecanedioate.

Preferably, the liquid solvent is retained at a temperature of less than 0 degrees Celsius in order to optimise the transfer of the volatile compounds into the liquid solvent.

In alternative preferred embodiments, the step of collecting the volatile compounds may be carried out using a condensation technique in which the volatile compounds are condensed and the condensate is collected. Condensation of the volatile compounds may be carried out using any suitable apparatus, for example, in a refrigerated column. Preferably, the condensate obtained is added to a liquid aerosol former, preferably propylene glycol.

The addition of a liquid aerosol former in the collection step, and particularly addition of propylene glycol, may advantageously prevent the condensed volatile compounds from splitting into two phases or forming an emulsion, as some tobacco constituents would tend to do. Without wishing to be bound by theory, the inventors have observed that the solubility of the tobacco constituents in the hydrolate (i.e. the aqueous fraction of the liquid, naturally derived tobacco extract) depends primarily on their polarity, on their concentration and on the pH of the hydrolate, which may vary depending on the tobacco type. As a result, an oily layer tends to form at the surface of the liquid, naturally derived tobacco extract, if the amount of aerosol former is not sufficient. Such oily material can aggregate at different locations on the trapping and desiccation equipment wherein the third and further steps of the method are carried out, respectively. The addition of a liquid aerosol former, such as propylene glycol, helps prevent the formation of such layer and favours homogenisation of the liquid, naturally derived tobacco extract. This, in turn, helps prevent any loss of desirable flavour-associated compounds during the fourth (desiccation) step, during which such compounds may undesirably deposit on the equipment surfaces.

In addition, the liquid aerosol former advantageously helps trap the flavour-associated compounds independent of their polarity and volatility. Further, during any subsequent drying step, the liquid aerosol former helps prevent loss of the most volatile fraction, as well as favour the selective removal of excess water from the liquid, naturally derived tobacco extract to obtain the concentrated tobacco extract.

Use of propylene glycol as the aerosol former for the collection step has the further advantage that, by reducing the water activity of aqueous solutions, propylene glycol exerts an anti-microbial activity. By adjusting the content of propylene glycol in the liquid tobacco extract, it is therefore also possible to ensure that the extract substantially does not undergo any microbial activity.

As a further alternative, the step of collecting the volatile compounds may be carried out using an adsorption technique in which the volatile compounds are adsorbed onto the surface of a solid adsorbent material, such as activated carbon. The adsorbed compounds are then transferred into a liquid solvent.

In the method of the present invention, the next step is the formation of a blended liquid tobacco extract from the collected volatile compounds from each of the tobacco starting materials. For each of the tobacco starting materials, the "collected volatile compounds" will typically comprise a solution of the tobacco derived volatile compounds in a liquid solvent or carrier.

The collected volatile compounds from each of the tobacco starting materials are combined in a desired ratio. The ratio may be adjusted depending on the desired composition and characteristics of the blended liquid tobacco extract.

Preferably, the step of combining the collected volatile compounds from the first and second tobacco materials comprises determining a target range for the content of 2-furanmethanol in the blended liquid tobacco extract and adjusting the ratio of the collected volatiles from the first tobacco material and the second tobacco material to provide a blended liquid tobacco extract with a 2-furanmethanol content within the target range.

The blended liquid tobacco extract is typically a homogenous liquid, that can be considered as an intermediate or semi-finished product. Such intermediate may be stored for a limited period of hold-time (up to about 4 weeks) prior to undergoing any drying step of a method in accordance with the invention. The composition of the blended liquid tobacco extract depends on a number of variables, including the nature of the tobacco starting materials; the moisture content in the tobacco starting materials; the amount of aerosol former used to prepare the tobacco starting materials, if any.

Where the volatile compounds are collected by absorption in a liquid solvent, as described above, the step of forming the blended liquid tobacco extract preferably comprises drying the solution of the volatile compounds in the liquid solvent in order to concentrate the solution. This may be carried out, for example, in order to arrive at a desired concentration of nicotine, or flavour compounds. Drying may be carried out before the collected volatile compounds from each of the tobacco starting materials are combined, or the collected volatile compounds and the respective solvents may be combined and the mixture may be dried in a single step.

Drying may be carried out using any suitable means, including but not limited to desiccation, molecular sieves, freeze drying, phase separation, distillation, membrane permeation, controlled crystallisation of water and filtering, reverse hygroscopicity, ultracentrifugation, liquid chromatography, reverse osmosis or chemical drying.

In preferred embodiments, the solution of the volatile compounds in a liquid solvent is concentrated by desiccation. In other words, the solution of the volatile compounds in a liquid solvent is heated to evaporate at least some of the water and obtain a concentrated tobacco extract. To this purpose, the solution of the volatile compounds in a liquid solvent may be heated to a temperature and for a time such that the water content in the tobacco extract is reduced by at least about 60 percent.

The partially desiccated, concentrated tobacco extract can be considered the primary product of a method in accordance with the present invention. Depleted tobacco material, from which the volatile species and most of the moisture content have been extracted upon heating during the second step, may be considered a by-product of the method. Such depleted tobacco material may typically have a moisture content of about 1 to 5 percent by weight, preferably about 2 to 3 percent by weight.

In an embodiment, the solution of the volatile compounds in a liquid solvent is heated under vacuum, preferably at a temperature of at least about 70 degrees Celsius. In another embodiment, the solution of the volatile compounds in a liquid solvent is heated under a flow of air, preferably under a flow of air having relatively low humidity, at a temperature of at least about 35 degrees Celsius. Thus, a naturally derived, concentrated tobacco extract can be obtained by a method in accordance with the invention. One such naturally derived, concentrated tobacco extract typically contains less than about 20 percent by weight of water.

Alternatively, where the volatile compounds are collected by condensation, the step of forming the blended liquid tobacco extract may comprise adding the condensate from each tobacco starting material to an aerosol former.

Optionally, the step of forming the blended liquid tobacco extract comprises a filtering step.

Optionally, the step of forming the blended liquid tobacco extract comprises adding one or more additives, such as an organic acid, to the solution of volatile compounds. However, in many cases the blended liquid tobacco extract is suitable for use without the inclusion of additives. As described above, the method of the present invention advantageously produces a natural liquid tobacco extract that has a highly desirable ratio of desired tobacco compounds, such as nicotine and flavour compounds, to undesirable tobacco compounds, in particular, 2-furanmethanol.

The blended liquid tobacco extract is particularly suitable for producing a nicotine composition, such as a liquid nicotine formulation or a nicotine gel composition, for use in an aerosol-generating system. In such an aerosol-generating system, the nicotine composition is typically heated within an aerosol-generating device.

As used herein, the term "aerosol generating device" refers to a device comprising a heater element that interacts with a nicotine composition incorporating a liquid tobacco extract such as that obtained by a method in accordance with the invention to produce an aerosol. During use, volatile compounds are released from the nicotine composition by heat transfer and entrained in air drawn through the aerosol generating device. As the released compounds cool they condense to form an aerosol that is inhaled by the consumer.

Upon heating of a nicotine composition comprising the liquid tobacco extract produced according to the method of the present invention, an aerosol is released containing the volatile compounds that have been collected from the tobacco starting material during the extraction process. By controlling the composition of the liquid tobacco extract through control of the parameters of the extraction parameter, it is possible to adjust the composition and characteristics of the resultant aerosol produced from the liquid tobacco extract and delivered to the consumer.

A nicotine composition for use in an aerosol-generating system can advantageously be formed directly from the blended liquid tobacco extract, without the need for addition of further nicotine or flavour compounds. In some embodiments, the nicotine composition may be a liquid tobacco extract resulting from an extraction process in accordance with the present invention, without the addition of further nicotine. The nicotine composition may be a liquid tobacco extract resulting from an extraction process in accordance with the present invention, without the addition of further nicotine. The nicotine composition may be a liquid tobacco extract resulting from an extraction process in accordance with the present invention, without the addition of further flavour compounds. The nicotine composition may be a liquid tobacco extract resulting from an extraction process in accordance with the present invention, without the addition of further furaneol. The nicotine composition may be a liquid tobacco extract resulting from an extraction process in accordance with the present invention, without the addition of further solvent. For example, the blended liquid tobacco extract produced by the method of the present invention may be used to make a nicotine composition comprising between 10 and 20 mg of nicotine per millilitre, without the need for addition of nicotine.

Alternatively, the liquid tobacco extract may be subjected to additional processing steps to form the nicotine composition. Even when subjected to such additional steps, the nicotine composition may be formed without the need for addition of further nicotine or flavour compounds.

Preferably, the liquid tobacco extract may be concentrated in a desiccation step as described above to form a concentrated tobacco extract, and the concentrated tobacco extract may be used to form the nicotine composition. Preferably, the concentrated tobacco extract comprises between 8 percent and 15 percent by weight water based on the weight of the concentrated tobacco extract. A nicotine composition suitable for use in an aerosol-generating system may comprise the blended liquid tobacco extract produced in a method according to the present invention in combination with water and an additional non-aqueous solvent, such as an aerosol former.

The nicotine composition may comprise at least about 10 percent by weight of a liquid tobacco extract obtained from a method in accordance with the present invention. Preferably, the nicotine composition comprises at least about 20 percent by weight of a liquid tobacco extract. More preferably, the nicotine composition comprises at least about 30 percent by weight of a liquid tobacco extract. In preferred embodiments, the nicotine composition comprises at least about 40 percent by weight of a liquid tobacco extract, more preferably at least about 50 percent by weight of a liquid tobacco extract, even more preferably at least about 60 percent by weight of a liquid tobacco extract. In particularly preferred embodiments, the nicotine composition comprises at least about 65 percent by weight of a liquid tobacco extract, more preferably at least about 70 percent by weight of a liquid tobacco extract, even more preferably at least about 75 percent by weight of a liquid tobacco extract, most preferably at least about 80 percent by weight of a liquid tobacco extract.

In some embodiments, the liquid tobacco extract is concentrated tobacco extract. The nicotine composition may comprise at least about 10 percent by weight of concentrated tobacco extract, at least about 20 percent by weight of concentrated tobacco extract, at least about 30 percent by weight of concentrated tobacco extract, at least about 40 percent by weight of concentrated tobacco extract, at least about 50 percent by weight of concentrated tobacco extract, preferably at least about 60 percent by weight of concentrated tobacco extract, more preferably at least about 70 percent by weight of concentrated tobacco extract, even more preferably at least about 75 percent by weight of concentrated tobacco extract, and most preferably at least about 80 percent by weight of concentrated tobacco extract.

In some embodiments, the nicotine composition comprises from about 40 percent by weight to about 95 percent by weight of a liquid tobacco extract. More preferably, the nicotine composition comprises from about 40 percent by weight to about 95 percent by weight of a liquid tobacco extract. Even more preferably, the nicotine composition comprises from about 50 percent by weight to about 95 percent by weight of a liquid tobacco extract. Most preferably, the nicotine composition comprises from about 60 percent by weight to about 95 percent by weight of a liquid tobacco extract. In some particularly preferred embodiments, the nicotine composition comprises from about 70 percent by weight to about 95 percent by weight of a liquid tobacco extract, even more preferably from about 80 percent by weight to about 95 percent by weight of a liquid tobacco extract.

In some embodiments, the nicotine composition comprises from about 40 percent by weight to about 90 percent by weight of a liquid tobacco extract. More preferably, the nicotine composition comprises from about 40 percent by weight to about 90 percent by weight of a liquid tobacco extract. Even more preferably, the nicotine composition comprises from about 50 percent by weight to about 90 percent by weight of a liquid tobacco extract. Most preferably, the nicotine composition comprises from about 60 percent by weight to about 90 percent by weight of a liquid tobacco extract. In some particularly preferred embodiments, the nicotine composition comprises from about 70 percent by weight to about 90 percent by weight of a liquid tobacco extract, even more preferably from about 80 percent by weight to about 90 percent by weight of a liquid tobacco extract.

In some embodiments, the nicotine composition comprises from about 40 percent by weight to about 85 percent by weight of a liquid tobacco extract. More preferably, the nicotine composition comprises from about 40 percent by weight to about 85 percent by weight of a liquid tobacco extract. Even more preferably, the nicotine composition comprises from about 85 percent by weight to about 90 percent by weight of a liquid tobacco extract. Most preferably, the nicotine composition comprises from about 60 percent by weight to about 85 percent by weight of a liquid tobacco extract. In some particularly preferred embodiments, the nicotine composition comprises from about 70 percent by weight to about 85 percent by weight of a liquid tobacco extract, even more preferably from about 80 percent by weight to about 85 percent by weight of a liquid tobacco extract.

The nicotine composition may comprise up to about 100 percent by weight of a liquid tobacco extract. In some embodiments, the nicotine composition may be formed directly from the liquid tobacco extract without the need for addition of additional non-aqueous solvent, flavourants or nicotine. That is to say, the nicotine composition may comprise 100 percent by weight of a liquid tobacco extract. In some embodiments, the liquid tobacco extract is concentrated tobacco extract, such that the nicotine composition may comprise 100 percent by weight of concentrated tobacco extract. In embodiments in which the nicotine composition comprises 100 percent by weight of a liquid tobacco extract or 100 percent by weight of concentrated tobacco extract, additional non-aqueous solvent is not present.

Alternatively, in some embodiments, the nicotine composition comprising liquid tobacco extract may comprise additional non-aqueous solvent. Additional non-aqueous solvent is non-aqueous solvent that has been added after the extraction step. Additional non-aqueous solvent is solvent that is supplemental to the non-aqueous extraction solvent present in the liquid tobacco extract. In embodiments in which the liquid tobacco extract is concentrated tobacco extract, the nicotine composition comprising concentrated tobacco extract may comprise additional non-aqueous solvent.

The additional non-aqueous solvent may be an aerosol former. Preferably, the additional non-aqueous solvent is triacetin, glycerin, propylene glycol, 1,3-propanediol or a mixture thereof.

In embodiments in which the nicotine composition comprises additional non-aqueous solvent, the nicotine composition may comprise 90 percent by weight or less of the additional non-aqueous solvent. Preferably, the nicotine composition comprises 80 percent by weight or less of the additional non-aqueous solvent. More preferably, the nicotine composition comprises 70 percent by weight or less of the additional non-aqueous solvent. In preferred embodiments, the nicotine composition comprises about 60 percent by weight or less of the additional non-aqueous solvent, more preferably about 50 percent by weight or less of the additional non-aqueous solvent, even more preferably about 40 percent by weight or less of the additional non-aqueous solvent. In particularly preferred embodiments, the nicotine composition comprises about 35 percent by weight or less of the additional non-aqueous solvent, more preferably about 30 percent by weight or less of the additional non-aqueous solvent, even more preferably about 25 percent by weight or less of the additional non-aqueous solvent, most preferably about 20 percent by weight or less of the liquid tobacco extract.

In a nicotine composition prepared by means of a method in accordance with the present invention at least 50 percent by weight based on the total weight of the nicotine composition of the nicotine content in the nicotine composition may come from the tobacco extract as opposed to being added following extraction. In preferred embodiments, at least 80 percent by weight based on the total weight of the nicotine composition of the nicotine content in the nicotine composition comes from the tobacco extract as opposed to being added following extraction. Even more preferably, at least 90 percent by weight based on the total weight of the nicotine composition of the nicotine content in the nicotine composition comes from the tobacco extract as opposed to being added following extraction.

In a nicotine composition prepared by means of a method in accordance with the present invention at least 50 percent by weight based on the total weight of the nicotine composition of the non-aqueous extraction solvent content in the nicotine composition may come from the tobacco extract as opposed to being added following extraction. In preferred embodiments, at least 80 percent by weight based on the total weight of the nicotine composition of the non-aqueous extraction solvent content in the nicotine composition comes from the tobacco extract as opposed to being added following extraction. Even more preferably, at least 90 percent by weight based on the total weight of the nicotine composition of the non-aqueous extraction solvent content in the nicotine composition comes from the tobacco extract as opposed to being added following extraction.

In a nicotine composition prepared by means of a method in accordance with the present invention at least 50 percent by weight based on the total weight of the nicotine composition of the water content in the nicotine composition may come from the tobacco extract as opposed to being added following extraction. In preferred embodiments, at least 80 percent by weight based on the total weight of the nicotine composition of the water content in the nicotine composition comes from the tobacco extract as opposed to being added following extraction. Even more preferably, at least 90 percent by weight based on the total weight of the nicotine composition of the water content in the nicotine composition comes from the tobacco extract as opposed to being added following extraction.

In a nicotine composition prepared by means of a method in accordance with the present invention at least 50 percent by weight based on the total weight of the nicotine composition of the desirable tobacco flavour species content in the nicotine composition may come from the tobacco extract as opposed to being added following extraction. In preferred embodiments, at least 80 percent by weight based on the total weight of the nicotine composition of the desirable tobacco flavour species content in the nicotine composition comes from the tobacco extract as opposed to being added following extraction. Even more preferably, at least 90 percent by weight based on the total weight of the nicotine composition of the desirable tobacco flavour species content in the nicotine composition comes from the tobacco extract as opposed to being added following extraction.

The nicotine composition may comprise a total content of propylene glycol of from about 10 percent to about 95 percent by weight. The nicotine composition may comprise a total content of propylene glycol of from about 20 percent to about 95 percent by weight, such as from about 50 percent to about 95 percent by weight, or from about 65 percent to about 95 percent by weight, from about 70 to about 90 percent by weight, or from about 80 percent to about 90 percent by weight.

The nicotine composition may comprise a total content of triacetin of from about 10 percent to about 95 percent by weight. The nicotine composition may comprise a total content of triacetin of from about 20 percent to about 95 percent by weight, such as from about 50 percent to about 95 percent by weight, from about 70 to about 90 percent by weight or from about 65 percent to about 95 percent by weight, or from about 80 percent to about 90 percent by weight.

The nicotine composition may comprise a total content of glycerine of from about 10 percent to about 95 percent by weight. The nicotine composition may comprise a total content of glycerine of from about 20 percent to about 95 percent by weight, such as from about 50 percent to about 95 percent by weight, or from about 65 percent to about 95 percent by weight, from about 70 to about 90 percent by weight or from about 80 percent to about 90 percent by weight.

The nicotine composition may comprise a total content of 1 ,3-propanediol of from about 10 percent to about 95 percent by weight. The nicotine composition may comprise a total content of 1,3-propanediol of from about 20 percent to about 95 percent by weight, such as from about 50 percent to about 95 percent by weight, or from about 65 percent to about 95 percent by weight, or from about 80 percent to about 90 percent by weight.

The nicotine composition comprises at least 0.2 percent by weight of nicotine. More preferably, the nicotine content in the nicotine composition liquid tobacco extract is at least about 0.4 percent by weight. The nicotine composition may have a nicotine content of about 12 percent by weight or less, for example about 10 percent by weight or less, preferably about 8 percent by weight by weight or less, more preferably about 5 percent by weight or less, preferably about 3.6 percent by weight or less. Most preferably, the nicotine composition comprises between about 0.4 percent by weight and 3.6 percent by weight nicotine, based on the weight of the nicotine composition.

The nicotine composition may comprise between 1 percent and 85 percent by weight of water. The nicotine composition may comprise between 2 percent and 50 percent by weight of water. The nicotine composition may comprise between 3 percent and 30 percent by weight of water. The nicotine composition may comprise between 5 percent and 25 percent by weight of water. The nicotine composition may comprise between 8 percent and 20 percent by weight of water. The nicotine composition preferably comprises between 10 percent and 15 percent by weight water.

In some embodiments, the nicotine composition may comprise one or more water-soluble organic acids. As used herein with reference to the invention, the term "water-soluble organic acid" describes an organic acid having a water solubility at 20°C of greater than or equal to about 500 mg/ml.

The one or more water-soluble organic acids may advantageously bind nicotine in the liquid tobacco extract through formation of one or nicotine salts. The one or more nicotine salts may advantageously be dissolved and stabilised in the water present in the liquid tobacco extract or in the non-aqueous solvent. This may advantageously reduce nicotine adsorption in the upper airways and enhance pulmonary nicotine delivery and retention as discussed above.

Preferably, the nicotine composition has a water-soluble organic acid content of greater than or equal to about 2 percent by weight. More preferably, the nicotine composition has a water-soluble organic acid content of greater than or equal to about 3 percent by weight.

The water-soluble organic acid may be acetic acid.

Exogenous acetic acid is acetic acid that has been added from a source other than the tobacco plant material, and is not acetic acid that is naturally present in the tobacco plant that has been separated from, removed from or derived from the tobacco plant material using the extraction processing conditions and techniques.

If acetic acid is added to the liquid tobacco extract to form the nicotine composition, then the total content of acetic acid in the nicotine composition, including both exogenous and endogenous acetic acid, is preferably from about 0.01 percent to about 8 percent by weight, for example between about 0.03 percent to about 8 percent by weight, from about 0.3 percent to about 8 percent by weight, from about 2 percent to about 8 percent by weight, or from about 3 percent to about 8 percent by weight. More preferably, the total acetic acid content is from about 0.01 percent to about 6 percent by weight, for example between about 0.03 percent to about 6 percent by weight, from about 0.3 percent to about 6 percent by weight, from about from about 2 percent to about 6 percent by weight, or from about 3 percent to about 6 percent by weight.

Preferably, the nicotine composition has a water-soluble organic acid content of less than or equal to about 8 percent by weight. More preferably, the nicotine composition has a water-soluble organic acid content of less than or equal to about 6 percent by weight.

Preferably, the nicotine composition has a water-soluble organic acid content of between about 2 percent by weight and about 8 percent by weight. For example, the nicotine composition may have a water-soluble organic acid content of between about 2 percent by weight and about 6 percent by weight.

More preferably, the nicotine composition has a water-soluble organic acid content of between about 3 percent by weight and about 8 percent by weight. For example, the nicotine composition may have a water-soluble organic acid content of between about 3 percent by weight and about 6 percent by weight.

The nicotine composition may comprise one or more non-tobacco-derived flavourants. Suitable non-tobacco-derived flavourants include, but are not limited to, menthol.

Preferably, the nicotine composition has a non-tobacco-derived flavourant content of less than or equal to about 4 percent by weight. More preferably, the nicotine composition has a non-tobacco-derived flavourant content of less than or equal to about 3 percent by weight.

A nicotine composition comprising the blended liquid tobacco extract according to the present invention may be provided in a cartridge for use in an aerosol-generating system. The cartridge may comprise an atomiser, configured to generate an aerosol from the nicotine composition. The atomise may be a thermal atomiser, which is configured to heat the nicotine composition to generate an aerosol. The thermal atomiser may comprise, for example, a heater and a liquid transport element configured to transport the nicotine composition to the heater. The liquid transport element may comprise a capillary wick. Alternatively, the atomiser may be a non-thermal atomiser, which is configured to generate an aerosol from the nicotine composition by means other than heating. The non-thermal atomiser may be, for example, an impinging jet atomiser, an ultrasonic atomiser or a vibrating mesh atomiser.

The cartridge containing the nicotine composition formed from the liquid tobacco extract of the present invention may be used in conjunction with any suitable aerosol-generating device comprising a housing configured to receive at least a portion of the cartridge. The aerosol-generating device may comprise a battery and control electronics.

An embodiment of the present invention will now be further described, by way of example only.

### Example

A first tobacco starting material is prepared from a Burley tobacco material having a reducing sugar content of less than 2 percent by weight. A second tobacco starting material is prepared from a flue-cured Bright tobacco material having a reducing sugar content of approximately 12 percent by weight. For each of the tobacco starting materials, the tobacco material is cut to form tobacco shreds having dimensions of 2.5 millimetres by 2.5 millimetres and the tobacco shreds are loaded into an extraction chamber, without compression. The tobacco starting material is heated within the extraction chamber. During heating, a flow of nitrogen is passed through the extraction chamber at a flow rate of about 40 litres per minute.

The first tobacco starting material is heated at a temperature of 140 degrees Celsius for 120 minutes. The second tobacco starting material is heated at a temperature of 130 degrees for 180 minutes.

For each tobacco starting material, the volatile compounds released during the heating step are collected by absorption into a liquid solvent formed of propylene glycol, at minus 10 degrees Celsius and with agitation of 750 rpm. The solution of propylene glycol with the collected volatile compounds is dried in a desiccation process to reduce the moisture level of the solution to approximately 15 percent.

The collected volatiles from the first tobacco starting material contains less than 0.05 mg of 2-furanmethanol per gram of tobacco. The collected volatiles from the second tobacco starting material contains around 0.65 mg of 2-furanmethanol per gram of tobacco.

The resultant concentrated solutions of collected volatiles from the first and second tobacco starting materials are blended at a ratio of approximately 60:40 in order to produce a blended liquid tobacco extract.

The blended liquid tobacco extract provides optimised levels of nicotine and desirable flavour compounds such as β-damascenone and β-ionone whilst retaining relatively low levels of 2-furanmethanol.

## Claims

1. A method of producing a blended liquid tobacco extract, the method comprising the steps of:
preparing a first tobacco starting material having a first reducing sugar content S1 and a first nicotine content N1;
preparing a second tobacco starting material having a second reducing sugar content S2 and a second nicotine content N2, wherein the second reducing sugar content S2 is higher than the first reducing sugar content S1 of the first tobacco starting material, wherein the first tobacco starting material and the second tobacco starting material are different from each other and wherein the first tobacco starting material and the second tobacco starting material have not been subjected to a prior extraction;
heating the first tobacco starting material at a first extraction temperature T1;
heating the second tobacco starting material at a second extraction temperature T2, wherein the second extraction temperature T2 is at least 10 degrees Celsius lower than the first extraction temperature T1;
collecting the volatile compounds released from the first and second tobacco starting materials in gaseous form during heating; and
combining the collected volatile compounds released from the first and second tobacco starting materials and forming a blended liquid tobacco extract from the combined volatile compounds.

2. A method according to claim 1 wherein the first and second extraction temperatures are selected from within the range of 100 degrees Celsius to 160 degrees Celsius.

3. A method according to claim 1 wherein the difference between the first and second extraction temperatures (T1-T2) corresponds to at least 1 degrees Celsius per 1 percent difference between the first and second reducing sugar contents (S2-S1).

4. A method according to claim 1 wherein the percentage difference between the first and second extraction temperatures is at least 0.5 times the percentage difference between the first and second reducing sugar contents.

5. A method according to any one of claims 1 to 4 wherein the second reducing sugar content is at least 10 percent greater than the first reducing sugar content and wherein the first extraction temperature is at least 10 degrees Celsius higher than the second extraction temperature.

6. A method according to claim 1, wherein the second nicotine content N2 is lower than the first nicotine content N1.

7. A method according to claim 6 wherein the difference between the first and second extraction temperatures (T1-T2) corresponds to at least 0.5 degrees Celsius per 1 percent difference between the second and first nicotine contents (N1-N2).

8. A method according to any preceding claim, wherein each extraction temperature is selected such that the collected volatile compounds from the corresponding tobacco starting material contains no more than 0.8 milligrams of 2-furanmethanol per gram of tobacco starting material.

9. A method according to any preceding claim, wherein the first and second extraction temperatures are selected to provide a liquid tobacco extract having a nicotine content of at least 0.02 percent by weight based on the dry weight of the liquid tobacco extract.

10. A method according to any preceding claim, wherein the first tobacco starting material is Burley tobacco and the second tobacco starting material is Bright tobacco.

11. A method according to any preceding claim, wherein the step of combining the collected volatile compounds from the first and second tobacco materials comprises determining a target range for the content of 2-furanmethanol in the liquid tobacco extract and adjusting the ratio of the collected volatiles from the first tobacco material and the second tobacco material to provide a blended liquid tobacco extract with a 2-furanmethanol content within the target range.

12. A method according to any preceding claim, wherein each of the first and second tobacco starting materials is heated at the corresponding extraction temperature for at least 90 minutes.

13. A method according to any preceding claim, wherein each of the first and second tobacco starting materials is heated in a flow of inert gas.

## Patentansprüche

1. Verfahren zur Herstellung eines gemischten flüssigen Tabakextraktes, das Verfahren umfassend die Schritte:
Vorbereiten eines ersten Tabakausgangsmaterials mit einem ersten reduzierenden Zuckergehalt S1 und einem ersten Nikotingehalt N1;
Vorbereiten eines zweiten Tabakausgangsmaterials mit einem zweiten reduzierenden Zuckergehalt S2 und einem zweiten Nikotingehalt N2, wobei der zweite reduzierende Zuckergehalt S2 höher ist als der erste reduzierende Zuckergehalt S1 des ersten Tabakausgangsmaterials, wobei das erste Tabakausgangsmaterial und das zweite Tabakausgangsmaterial voneinander verschieden sind und wobei das erste Tabakausgangsmaterial und das zweite Tabakausgangsmaterial keiner vorherigen Extraktion unterzogen wurden;
Erwärmen des ersten Tabakausgangsmaterials auf eine erste Extraktionstemperatur T1;
Erwärmen des zweiten Tabakausgangsmaterials auf eine zweite Extraktionstemperatur T2, wobei die zweite Extraktionstemperatur T2 wenigstens 10 Grad Celsius niedriger ist als die erste Extraktionstemperatur T1;
Auffangen der flüchtigen Verbindungen, die während des Erwärmens aus den ersten und zweiten Tabakausgangsmaterialien in gasförmiger Form freigesetzt werden; und
Kombinieren der aufgefangenen flüchtigen Verbindungen, die aus dem ersten und zweiten Tabakausgangsmaterial freigesetzt wurden, und Bilden eines gemischten flüssigen Tabakextraktes aus den kombinierten flüchtigen Verbindungen.

2. Verfahren nach Anspruch 1, wobei die ersten und zweiten Extraktionstemperaturen innerhalb des Bereichs von 100 Grad Celsius bis 160 Grad Celsius ausgewählt werden.

3. Verfahren nach Anspruch 1, wobei die Differenz zwischen der ersten und der zweiten Extraktionstemperatur (T1-T2) wenigstens 1 Grad Celsius pro 1 Prozent Differenz zwischen dem ersten und dem zweiten reduzierenden Zuckergehalt (S2-S1) entspricht.

4. Verfahren nach Anspruch 1, wobei die prozentuale Differenz zwischen der ersten und der zweiten Extraktionstemperatur wenigstens das 0,5-fache der prozentualen Differenz zwischen dem ersten und dem zweiten reduzierenden Zuckergehalt beträgt.

5. Verfahren nach einem beliebigen der Ansprüche 1 bis 4, wobei der zweite reduzierende Zuckergehalt wenigstens 10 Prozent größer ist als der erste reduzierende Zuckergehalt und wobei die erste Extraktionstemperatur wenigstens 10 Grad Celsius höher ist als die zweite Extraktionstemperatur.

6. Verfahren nach Anspruch 1, wobei der zweite Nikotingehalt N2 niedriger ist als der erste Nikotingehalt N1.

7. Verfahren nach Anspruch 6, wobei die Differenz zwischen der ersten und zweiten Extraktionstemperatur (T1-T2) wenigstens 0,5 Grad Celsius pro 1 Prozent Differenz zwischen dem zweiten und ersten Nikotingehalt (N1-N2) entspricht.

8. Verfahren nach einem beliebigen vorhergehenden Anspruch, wobei jede Extraktionstemperatur so gewählt wird, dass die aufgefangenen flüchtigen Verbindungen aus dem entsprechenden Tabakausgangsmaterial nicht mehr als 0,8 Milligramm 2-Furanmethanol pro Gramm Tabakausgangsmaterial enthalten.

9. Verfahren nach einem beliebigen vorhergehenden Anspruch, wobei die ersten und zweiten Extraktionstemperaturen so gewählt werden, dass sie einen flüssigen Tabakextrakt mit einem Nikotingehalt von wenigstens 0,02 Gewichtsprozent basierend auf dem Trockengewicht des flüssigen Tabakextraktes vorsehen.

10. Verfahren nach einem beliebigen vorhergehenden Anspruch, wobei es sich bei dem ersten Tabakausgangsmaterial um Burley-Tabak und bei dem zweiten Tabakausgangsmaterial um hellen Tabak handelt.

11. Verfahren nach einem beliebigen vorhergehenden Anspruch, wobei der Schritt des Kombinierens der aufgefangenen flüchtigen Verbindungen aus dem ersten und zweiten Tabakmaterial das Ermitteln eines Zielbereichs für den Gehalt an 2-Furanmethanol in dem flüssigen Tabakextrakt und das Einstellen des Verhältnisses der aufgefangenen flüchtigen Verbindungen aus dem ersten Tabakmaterial und dem zweiten Tabakmaterial umfasst, um einen gemischten flüssigen Tabakextrakt mit einem 2-Furanmethanol-Gehalt innerhalb des Zielbereichs vorzusehen.

12. Verfahren nach einem beliebigen vorhergehenden Anspruch, wobei jedes des ersten und zweiten Tabakausgangsmaterials bei der entsprechenden Extraktionstemperatur für wenigstens 90 Minuten erwärmt wird.

13. Verfahren nach einem beliebigen vorhergehenden Anspruch, wobei jedes des ersten und zweiten Tabakausgangsmaterials in einem Strom von Inertgas erwärmt wird.

## Revendications

1. Procédé de production d'un extrait de tabac liquide mélangé, le procédé comprenant les étapes de :
préparation d'un premier matériau de départ de tabac ayant une première teneur en sucre réducteur S1 et une première teneur en nicotine N1 ;
préparation d'un deuxième matériau de départ de tabac ayant une deuxième teneur en sucre réducteur S2 et une deuxième teneur en nicotine N2, dans lequel la deuxième teneur en sucre réducteur S2 est supérieure à la première teneur en sucre réducteur S1 du premier matériau de départ de tabac, dans lequel le premier matériau de départ de tabac et le deuxième matériau de départ de tabac sont différents l'un de l'autre et dans lequel le premier matériau de départ de tabac et le deuxième matériau de départ de tabac n'ont pas été soumis à une extraction préalable ;
chauffage du premier matériau de départ de tabac à une première température d'extraction T1 ;
chauffage du deuxième matériau de départ de tabac à une deuxième température d'extraction T2, dans lequel la deuxième température d'extraction T2 est inférieure d'au moins 10 degrés Celsius à la première température d'extraction T1 ;
collecte des composés volatils dégagés à partir des premier et deuxième matériaux de départ de tabac sous forme gazeuse pendant le chauffage ; et
combinaison des composés volatils collectés dégagés à partir des premier et deuxième matériaux de départ de tabac et formation d'un extrait de tabac liquide mélangé à partir des composés volatils combinés.

2. Procédé selon la revendication 1, dans lequel les première et deuxième températures d'extraction sont choisies dans la plage de 100 degrés Celsius à 160 degrés Celsius.

3. Procédé selon la revendication 1, dans lequel la différence entre les première et deuxième températures d'extraction (T1-T2) correspond à au moins 1 degré Celsius pour 1 pour cent de différence entre les première et deuxième teneurs en sucre réducteur (S2-S1).

4. Procédé selon la revendication 1, dans lequel la différence de pourcentage entre les première et deuxième températures d'extraction est d'au moins 0,5 fois la différence de pourcentage entre les première et deuxième teneurs en sucre réducteur.

5. Procédé selon l'une quelconque des revendications 1 à 4, dans lequel la deuxième teneur en sucre réducteur est supérieure d'au moins 10 pour cent à la première teneur en sucre réducteur et dans lequel la première température d'extraction est supérieure d'au moins 10 degrés Celsius à la deuxième température d'extraction.

6. Procédé selon la revendication 1, dans lequel la deuxième teneur en nicotine N2 est inférieure à la première teneur en nicotine N1.

7. Procédé selon la revendication 6, dans lequel la différence entre les première et deuxième températures d'extraction (T1-T2) correspond à au moins 0,5 degré Celsius pour 1 pour cent de différence entre les deuxième et première teneurs en nicotine (N1-N2) .

8. Procédé selon l'une quelconque des revendications précédentes, dans lequel chaque température d'extraction est choisie de telle sorte que les composés volatils collectés à partir du matériau de départ de tabac correspondant ne contiennent pas plus de 0,8 milligramme de 2-furanméthanol par gramme de matériau de départ de tabac.

9. Procédé selon l'une quelconque des revendications précédentes, dans lequel les première et deuxième températures d'extraction sont choisies pour fournir un extrait de tabac liquide ayant une teneur en nicotine d'au moins 0,02 pour cent en poids sur la base du poids à sec de l'extrait de tabac liquide.

10. Procédé selon l'une quelconque des revendications précédentes, dans lequel le premier matériau de départ de tabac est du tabac Burley et le deuxième matériau de départ de tabac est du tabac blond.

11. Procédé selon l'une quelconque des revendications précédentes, dans lequel l'étape de combinaison des composés volatils collectés à partir des premier et deuxième matériaux de tabac comprend la détermination d'une plage cible pour la teneur en 2-furanméthanol dans l'extrait de tabac liquide et l'ajustement du rapport des volatils collectés à partir du premier matériau de tabac et du deuxième matériau de tabac pour fournir un extrait de tabac liquide mélangé avec une teneur en 2-furanméthanol dans la plage cible.

12. Procédé selon l'une quelconque des revendications précédentes, dans lequel les premier et deuxième matériaux de départ de tabac sont chauffés à la température d'extraction correspondante pendant au moins 90 minutes.

13. Procédé selon l'une quelconque des revendications précédentes, dans lequel chacun des premier et deuxième matériaux de départ de tabac est chauffé dans un écoulement de gaz inerte.
